(19) **Europäisches Patentamt / European Patent Office / Office européen des brevets**

(11) **EP 4 723 228 A1**

(12) **EUROPEAN PATENT APPLICATION**
published in accordance with Art. 153(4) EPC

(43) Date of publication:
**08.04.2026 Bulletin 2026/15**

(21) Application number: **24815791.9**

(22) Date of filing: **23.05.2024**

(51) International Patent Classification (IPC):
*H01M 4/525* (2010.01)       *H01M 4/505* (2010.01)
*H01M 10/052* (2010.01)       *H01M 4/131* (2010.01)
*H01M 4/02* (2006.01)

(52) Cooperative Patent Classification (CPC):
Y02E 60/10

(86) International application number:
**PCT/KR2024/007025**

(87) International publication number:
**WO 2024/248415 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 26.05.2023  KR 20230068277
21.05.2024  KR 20240065524

(71) Applicant: **Posco Future M Co., Ltd.**
**Pohang-si, Gyeongsangbuk-do 37918 (KR)**

(72) Inventors:
• **PARK, Jeonghyeon**
**Sejong  30002 (KR)**

• **CHOI, Kwonyoung**
**Sejong  30002 (KR)**
• **KIM, Jaehan**
**Gumi-si, Gyeongsangbuk-do 39171 (KR)**
• **LIM, Seokjae**
**Gumi-si, Gyeongsangbuk-do 39171 (KR)**
• **SEO, Sunghwa**
**Sejong  30002 (KR)**
• **KIM, Seong In**
**Sejong  30002 (KR)**

(74) Representative: **Meissner Bolte Partnerschaft mbB**
**Patentanwälte Rechtsanwälte**
**Postfach 86 06 24**
**81633 München (DE)**

(54) **CATHODE ACTIVE MATERIAL AND LITHIUM SECONDARY BATTERY INCLUDING SAME**

(57)    The positive electrode active material according to the present invention is in the form of a secondary particle comprising a plurality of primary particles, and is characterized in that it satisfies Formula 1.

【Fig. 1】

## Description

[Technical Field]

The present invention relates to a positive electrode active material, and more particularly, to a positive electrode active material in the form of a secondary particle comprising a plurality of primary particles, and a lithium secondary battery including the same.

[Background ]

With the recent explosive increase in demand for IT mobile devices, small electric driving devices (such as e-bikes and small EVs), and energy storage systems (ESS), the development of secondary batteries having high capacity and high energy density has been actively pursued worldwide. In order to manufacture such high-capacity batteries, it is essential to employ high-capacity positive electrode materials. Among the existing layered positive electrode active materials, $LiNiO_2$ exhibits the highest capacity (275 mAh/g); however, it is difficult to commercialize due to its structural collapse during charge and discharge and its low thermal stability caused by oxidation-state issues.

To overcome these problems, it is necessary to substitute unstable Ni sites with other stable transition metals (such as Co and Mn), leading to the development of ternary NCM-type materials in which Co and Mn are substituted.

Conventional high-nickel NCM positive electrode active materials are typically composed of secondary particles formed by aggregation of primary particles, wherein the perimeters and sizes of the primary particles inside the secondary particle are substantially uniform. In such cases, since the primary particles located on the surface of the secondary particle, which are directly in contact with the electrolyte, are as small as those located inside the secondary particle, the specific surface area of the positive electrode active material increases.

A positive electrode active material having a large specific surface area results in an increased contact area with the electrolyte, thereby causing degradation of the positive electrode active material.

When the positive electrode active material is degraded, cell-level stability problems may occur due to gas generation. Furthermore, as electrochemical reactions are repeated during charge and discharge, a rock-salt phase material may be formed on the surface of the positive electrode active material, leading to a reduction in the reversibility of the capacity of the positive electrode active material.

Accordingly, there is a need to develop a positive electrode active material capable of reducing the specific surface area exposed to the electrolyte, thereby enhancing battery lifetime stability and exhibiting an effect of reducing gas generation.

[Detailed Description of the Invention]

[Technical Problem]

The present invention aims to provide a positive electrode active material in which degradation is suppressed and gas generation is effectively reduced.

In addition, the present invention aims to provide a lithium secondary battery that exhibits excellent lifetime stability and reduced gas generation.

[Technical Solution]

The present invention provides a positive electrode active material in the form of a secondary particle comprising a plurality of primary particles, wherein the positive electrode active material satisfies the following Formula 1:

(Average perimeter of the primary particles present in a region of 2/3 to 3/3R from the center of the secondary particle) $\geq 1.5 \times$ (Average perimeter of the primary particles present in a region of 1/3R      [Formula 1] from the center of the secondary particle), wherein R is a distance from the center of the secondary particle to the surface of the secondary particle.

The present invention also provides a lithium secondary battery comprising the aforementioned positive electrode active material, a positive electrode including the same, a negative electrode, and a non-aqueous electrolyte.

[Effects of the Invention]

The positive electrode active material according to the present invention has the advantage of effectively suppressing degradation and significantly reducing gas generation.

In addition, the lithium secondary battery according to the present invention exhibits excellent lifetime stability and reduced gas generation.

[Brief Description of Drawings]

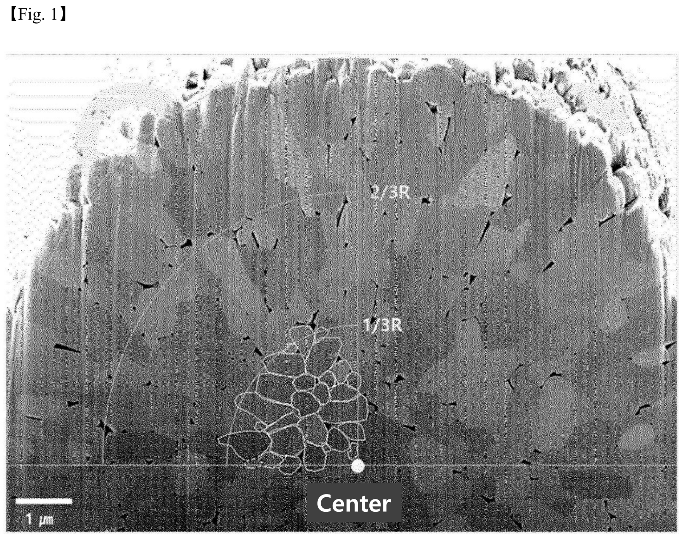

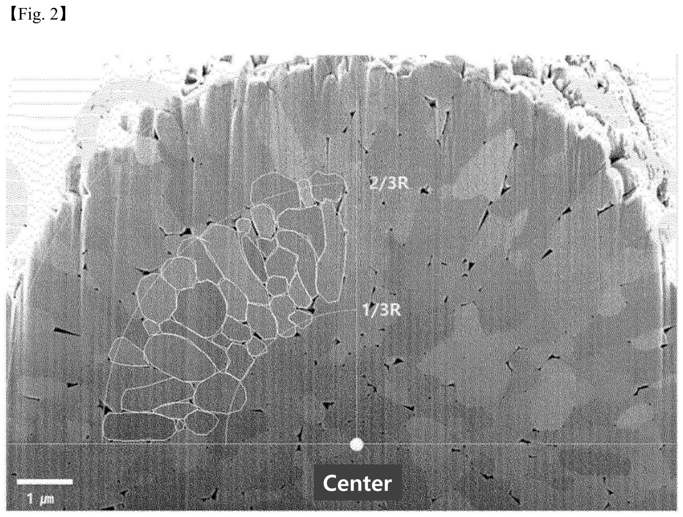

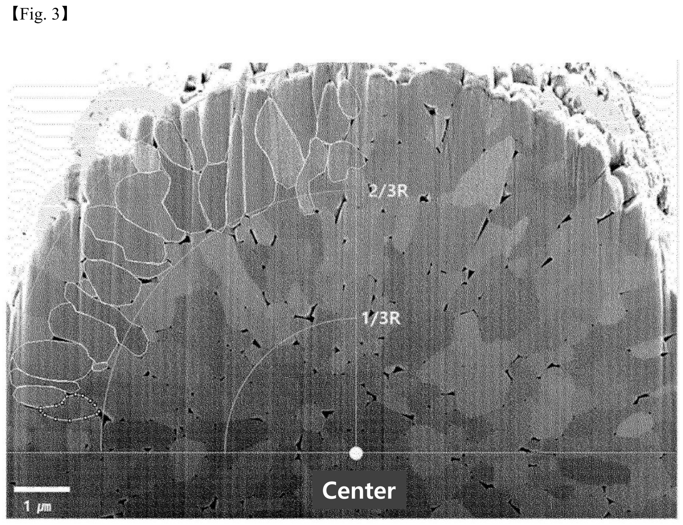

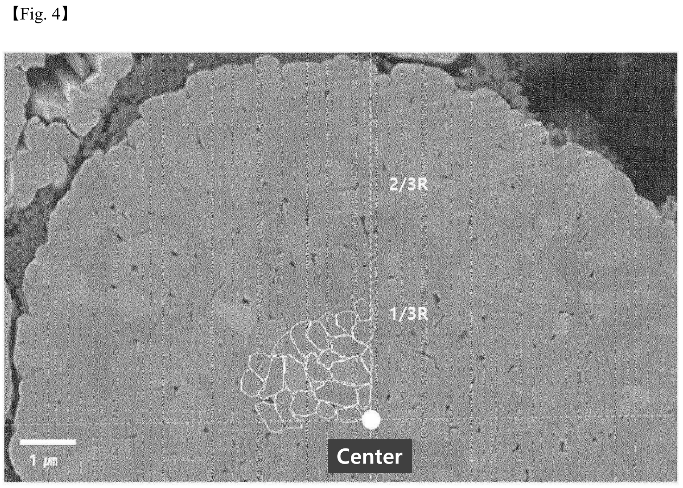

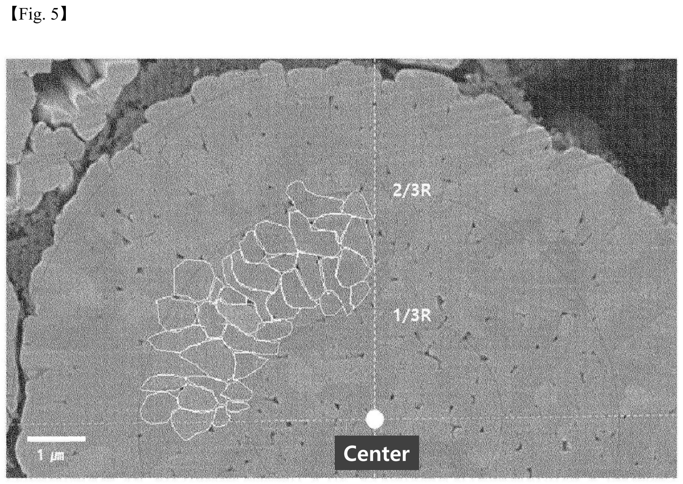

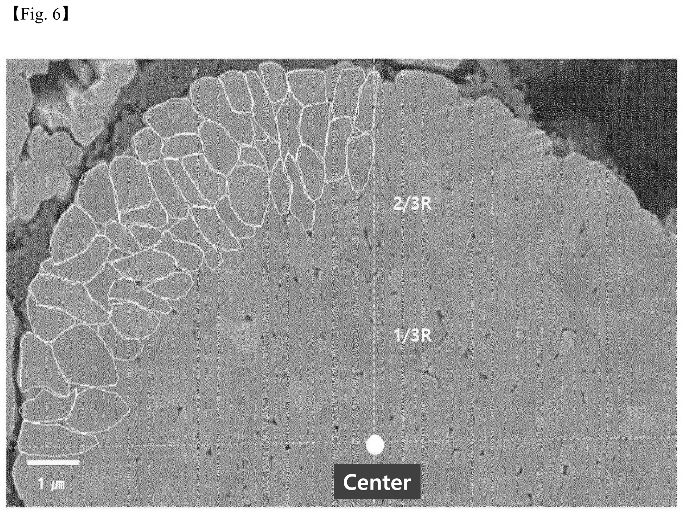

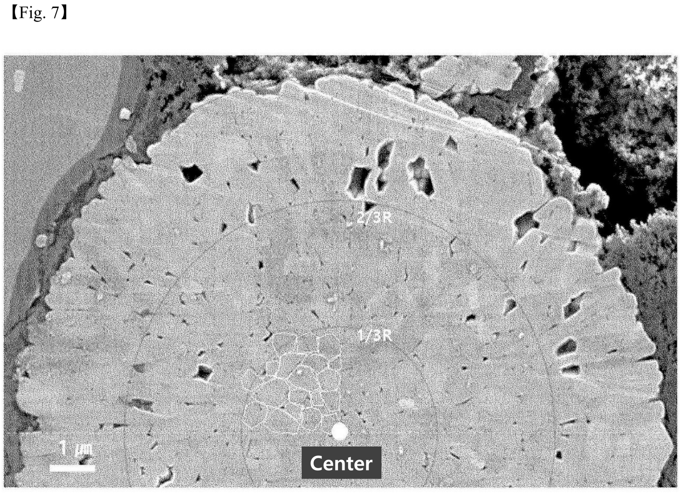

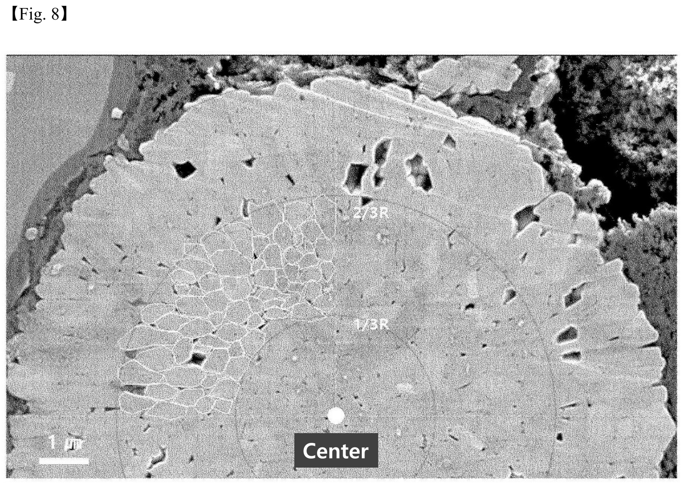

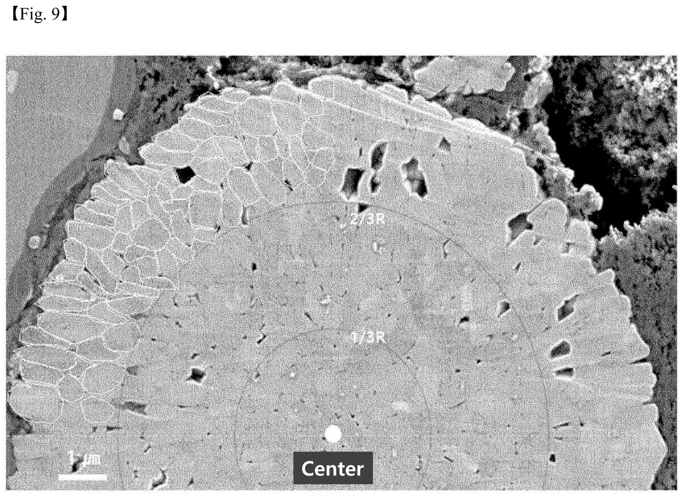

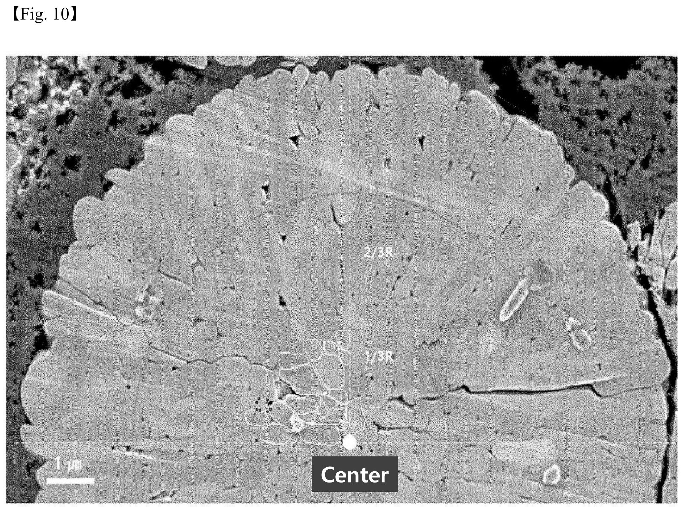

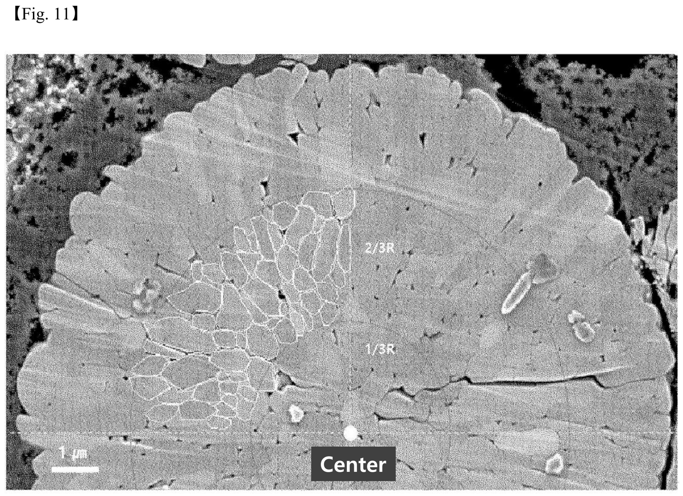

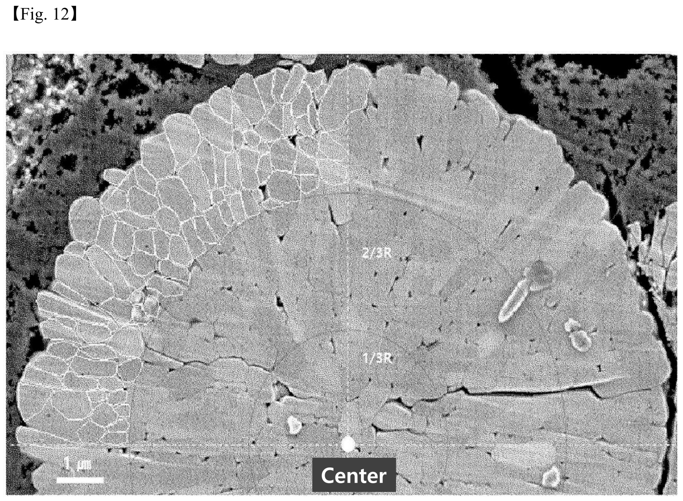

FIGS. 1 to 12 are images illustrating measurement examples of the perimeters of primary particles within each region of the secondary particles of the positive electrode active materials according to Examples and Comparative Examples.

[Mode for Carrying Out the Invention]

Hereinafter, exemplary embodiments of the present invention will be described in detail. However, these examples are provided for illustrative purposes only, and the present invention is not limited thereto but is defined only by the scope of the claims described below.

In the present invention, when a certain member is described as being "on" another member, this includes not only cases where the certain member is directly in contact with the other member, but also cases where another member is interposed therebetween.

In the present invention, when a part is described as "comprising/containing/including" a specific component, unless otherwise stated, it does not exclude the presence of other components but may further include additional components.

### <Positive Electrode Active Material>

One aspect of the present invention relates to a positive electrode active material in the form of a secondary particle comprising a plurality of primary particles, wherein the positive electrode active material satisfies the following Formula 1:

(Average perimeter of the primary particles present in a region of 2/3 to 3/3R from the center of the secondary particle) $\geq 1.5 \times$ (Average perimeter of the primary particles present in a region of 1/3R from the center of the secondary particle),   [Formula 1]

wherein R is a distance from the center of the secondary particle to the surface of the secondary particle.

In the positive electrode active material according to the present invention, the average perimeter of the primary particles increases from the inside toward the outside of the secondary particle. Accordingly, since the contact area with the electrolyte can be reduced, degradation during battery cycling can be suppressed, and gas generation can be effectively reduced.

In the present invention, the term "primary particle" refers to a minimum distinguishable particle unit that can be identified as a single mass when the cross-section of the positive electrode active material is observed using a scanning electron microscope (SEM). The primary particle may consist of a single crystallite or may include a plurality of crystallites. Here, the term "crystallite" refers to a distinct region within the primary particle in which atoms form a lattice structure in a specific orientation.

In addition, the term "secondary particle" refers to an aggregate in which several tens to several hundreds of primary particles are physically or chemically bonded to one another, even without an intentional aggregation or assembly process.

In the present invention, the "average perimeter" may be obtained from an image of the primary particles identified on a cross-sectional image of the secondary particle. Specifically, the average perimeter of the primary particles may be measured using an ImageJ program based on the cross-sectional SEM image of the secondary particle. More specifically, the average perimeter of the primary particles may be an average value measured from about 10 to 50 primary particles observed in the cross-sectional SEM image of the secondary particle, and in particular, from about 15 to 50 particles, more particularly from about 20 to 35 particles.

The positive electrode active material according to the present invention has a gradient satisfying Formula 1 from the center to the surface of the secondary particle. In the present invention, the "center of the secondary particle" refers to the midpoint of the longest diameter of the secondary particle. By having such a gradient satisfying Formula 1 from the center to the surface of the secondary particle, the positive electrode active material according to the present invention exhibits a smaller specific surface area than that of a positive electrode active material having primary particles of substantially uniform size within the secondary particle. Therefore, when applied to a lithium secondary battery, the contact area with the electrolyte is reduced, resulting in suppressed capacity degradation during cycling.

In one embodiment of the present invention, the positive electrode active material may satisfy the following Formula 2:

(Average perimeter of the primary particles present in a region of 2/3 to 3/3R from the center of the secondary particle) $\geq$ 1.7 $\times$ (Average perimeter of the primary particles present in a region of 1/3R from the center of the secondary particle). [Formula 2]

In another embodiment of the present invention, the positive electrode active material may satisfy the following Formula 3:

3.0 $\times$ (Average perimeter of the primary particles present in a region of 1/3R from the center of the secondary particle) $\geq$ (Average perimeter of the primary particles present in a region of 2/3 to 3/3R from the center of the secondary particle) $\geq$ 1.8 $\times$ (Average perimeter of the primary particles present in a region of 1/3R from the center of the secondary particle). [Formula 3]

Specifically, the average perimeter of the primary particles present in a region of 2/3 to 3/3R from the center of the secondary particle may be from 1.8 $\times$ to 2.5 $\times$ the average perimeter of the primary particles present in a region of 1/3R from the center of the secondary particle.

When the average perimeter of the primary particles present in a region of 2/3 to 3/3R from the center of the secondary particle satisfies the above relation, it is preferable because the effect of suppressing degradation during cycling is maximized.

In another embodiment of the present invention, the positive electrode active material may satisfy the following Formula 4:

(Average perimeter of the primary particles present in a region of 1/3 to 2/3R from the center of the secondary particle) $\geq$ 1.1 $\times$ (Average perimeter of the primary particles present in a region of 1/3R from the center of the secondary particle). [Formula 4]

In another embodiment of the present invention, the positive electrode active material may satisfy the following Formula 5:

2.0 $\times$ (Average perimeter of the primary particles present in a region of 1/3R from the center of the secondary particle) $\geq$ (Average perimeter of the primary particles present in a region of 1/3 to 2/3R from the center of the secondary particle) $\geq$ 1.2 $\times$ (Average perimeter of the primary particles present in a region of 1/3R from the center of the secondary particle). [Formula 5]

Specifically, the average perimeter of the primary particles present in a region of 1/3 to 2/3R from the center of the secondary particle may be from 1.2 $\times$ to 1.5 $\times$ the average perimeter of the primary particles present in a region of 1/3R from the center of the secondary particle.

When the average perimeter of the primary particles present in a region of 1/3 to 2/3R from the center of the secondary particle satisfies the above relation, it is preferable because a smaller specific surface area leads to an excellent effect of reducing gas generation.

Another embodiment of the present invention provides a positive electrode active material satisfying the following Formula 6:

(Average perimeter of the primary particles present in a region of 2/3 to 3/3R from the center of the secondary particle) $\geq$ 1.1 $\times$ (Average perimeter of the primary particles present in a region of 1/3 to 2/3R from the center of the secondary particle). [Formula 6]

In another embodiment of the present invention, the positive electrode active material may satisfy the following Formula 7:

2.0 × (Average perimeter of the primary particles present in a region of 1/3 to 2/3R from the center of the secondary particle) ≥ (Average perimeter of the primary particles present in a region of 2/3 to 3/3R from the center of the secondary particle) ≥ 1.2 × (Average perimeter of the primary particles present in a region of 1/3 to 2/3R from the center of the secondary particle).     [Formula 7]

Specifically, the average perimeter of the primary particles present in a region of 2/3 to 3/3R from the center of the secondary particle may be from 1.2 × to 1.4 × the average perimeter of the primary particles present in a region of 1/3 to 2/3R from the center of the secondary particle.

When the average perimeter of the primary particles present in a region of 2/3 to 3/3R from the center of the secondary particle satisfies the above relation, it is advantageous because the surface portion of the positive electrode active material can reduce the surface area in contact with the electrolyte.

In another embodiment of the present invention, the average perimeter of the primary particles present in a region of 2/3 to 3/3R from the center of the secondary particle may be 3.2 $\mu$m or less, preferably from 2.00 to 3.15 $\mu$m, and more preferably from 2.10 to 3.10 $\mu$m.

When the average perimeter of the primary particles present in a region of 2/3 to 3/3R from the center of the secondary particle falls within the above range, the formation of a rock-salt phase material can be effectively suppressed when the positive electrode active material is applied to a lithium secondary battery, which is advantageous.

In another embodiment of the present invention, the average perimeter of the primary particles present in a region of 1/3 to 2/3R from the center of the secondary particle may be 2.5 $\mu$m or less, preferably from 1.8 to 2.5 $\mu$m, and more preferably from 1.85 to 2.45 $\mu$m.

When the average perimeter of the primary particles present in a region of 1/3 to 2/3R from the center of the secondary particle satisfies the above range, it is preferable because degradation during cycling of the positive electrode active material can be suppressed and stability issues at the cell level caused by gas generation can be prevented when applied to a lithium secondary battery.

In another embodiment of the present invention, the average perimeter of the primary particles present in a region of 1/3R from the center of the secondary particle may be 1.8 $\mu$m or less, preferably from 1.0 to 1.8 $\mu$m, and more preferably from 1.1 to 1.7 $\mu$m.

When the average perimeter of the primary particles present in a region of 1/3R from the center of the secondary particle satisfies the above range, cracking caused by volume expansion can be effectively suppressed when the positive electrode active material is applied to a lithium secondary battery, which is advantageous.

In another embodiment of the present invention, the secondary particle may have an average particle diameter (D50) of 20 $\mu$m or less, preferably from 7 to 18 $\mu$m, and more preferably from 8 to 15 $\mu$m.

In the present invention, the "average particle diameter (D50)" may be measured using a particle size analyzer or may be obtained from a cross-sectional image, similar to the "average perimeter."

When the average particle diameter of the secondary particle is within the above range, the capacity of the positive electrode active material can be improved, which is preferable.

In another embodiment of the present invention, the average perimeter of the primary particles present within the secondary particle may be from 2.0 to 2.5 $\mu$m, preferably from 2.05 to 2.45 $\mu$m. Specifically, the average perimeter of the primary particles present within the secondary particle may refer to the average perimeter of the primary particles present within 3/3R from the center of the secondary particle.

When the average perimeter of the primary particles present within the secondary particle is within the above range, it is preferable because a high capacity can be achieved when applied to a lithium secondary battery, and sufficient capacity can be realized even with a low content of conductive material.

In another embodiment of the present invention, the positive electrode active material may include at least one transition metal selected from the group consisting of nickel, cobalt, and manganese.

In another embodiment of the present invention, the positive electrode active material may be represented by the following Chemical Formula 1:

[Chemical Formula 1]          $Li_aNi_xCo_yMn_zM_{1k}O_2$

wherein, in Chemical Formula 1, $0.9 \le a \le 1.1$, $0.3 \le x \le 1.0$, $0 \le y \le 0.4$, $0 \le z \le 0.4$, $0 \le k \le 0.04$, and $x + y + z + k = 1$, and $M_1$ is one or more elements selected from the group consisting of Al, Zr, Nb, Mo, W, Ti, Ce, Mg, B, P, V, and Sr.

Specifically, in the positive electrode active material according to the present invention, the content of nickel among the metals in the secondary particle may be from 30 mol% to 95 mol%. More specifically, the nickel content may be 60 mol% or more, even more specifically 70 mol% or more, and most preferably 80 mol% or more.

In short, the positive electrode active material according to the present invention may be a high-nickel positive electrode active material.

The positive electrode active material according to the present invention may have a specific surface area, measured by the BET nitrogen adsorption method, of 0.78 m²/g or less, preferably from 0.40 to 0.71 m²/g, and more preferably from 0.42 to 0.56 m²/g.

When the specific surface area of the positive electrode active material is within the above range, the material can provide excellent lifetime stability and an effective gas-reduction effect when applied to a lithium secondary battery.

In the positive electrode active material according to the present invention, the perimeter of the primary particles increases from the center toward the surface of the secondary particle within the range satisfying Formula 1, thereby reducing the contact area with the electrolyte when applied to a lithium secondary battery. Accordingly, degradation of the positive electrode active material and stability issues caused by gas generation at the cell level can be suppressed. Furthermore, during repeated charge and discharge cycles, formation of a rock-salt phase material that reduces the reversible capacity of the positive electrode active material can be effectively prevented, thereby achieving excellent lifetime stability and gas-reduction performance.

The method for preparing a positive electrode active material satisfying Formula 1 is not particularly limited in the present invention. For example, the positive electrode active material may be obtained by preparing a precursor using a conventional co-precipitation method, mixing the precursor with a lithium source, and then performing calcination, but is not limited thereto. The calcination may be performed at a temperature exceeding 730°C and not higher than 940°C, preferably from 740°C to 900°C, and more preferably from 750°C to 800°C. When the calcination is carried out within this range, it is preferable because the desired positive electrode active material can be effectively obtained.

**\<Lithium** Secondary Battery\>

Another aspect of the present invention relates to a lithium secondary battery comprising: a positive electrode including the aforementioned positive electrode active material; a negative electrode; and a non-aqueous electrolyte.

Specifically, the positive electrode may include a positive electrode active material layer containing the positive electrode active material in the form of secondary particles comprising a plurality of primary particles and satisfying Formula 1.

Since the lithium secondary battery according to the present invention is fabricated using a positive electrode active material in the form of secondary particles comprising a plurality of primary particles and satisfying Formula 1, the battery exhibits excellent lifetime stability and suppressed gas generation while maintaining superior electrochemical properties.

The positive electrode active material layer for the lithium secondary battery may include a binder and a conductive material.

The binder serves to enhance the adhesion between the positive electrode active material particles and also to ensure firm adhesion of the positive electrode active material to the current collector.

The conductive material is used to impart electrical conductivity to the electrode and can be any electronically conductive material that does not cause chemical changes in the battery system.

The negative electrode may include a current collector and a negative electrode active material layer formed on the current collector, wherein the negative electrode active material layer may include a negative electrode active material.

The negative electrode active material may include a material capable of reversibly intercalating and deintercalating lithium ions, lithium metal, an alloy of lithium metal, a material capable of doping and dedoping lithium, or a transition metal oxide.

As the material capable of reversibly intercalating and deintercalating lithium ions, a carbon-based material may be used, and any carbonaceous negative electrode active material commonly used in lithium secondary batteries may be employed.

Examples include crystalline carbon, amorphous carbon, or a combination thereof.

As the lithium metal alloy, an alloy of lithium and at least one metal selected from the group consisting of Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, examples include Si, $SiO_x$ ($0 < x < 2$), Si-Y alloys (wherein Y is selected from the group consisting of alkali metals, alkaline earth metals, Group 13 elements, Group 14 elements, transition metals, rare earth elements, and combinations thereof, excluding Si), Sn, $SnO_2$, and Sn-Y alloys (wherein Y is as defined above but excluding Sn).

As the transition metal oxide, examples include vanadium oxide and lithium vanadium oxide.

The negative electrode active material layer may further include a binder, and optionally, a conductive material.

The binder serves to improve adhesion between the negative electrode active material particles and between the negative electrode active material and the current collector.

The conductive material is used to impart electrical conductivity to the electrode and may be any electronically conductive material that does not cause chemical reactions in the battery.

Examples of the current collector include aluminum foil, nickel foil, stainless steel foil, titanium foil, nickel foam, aluminum foam, a polymer substrate coated with a conductive metal, and combinations thereof.

The negative electrode and the positive electrode may be manufactured by preparing a slurry by mixing an active material, conductive material, and binder in a solvent, and then applying the slurry onto a current collector, followed by drying and pressing.

The method of electrode fabrication is not particularly limited in the present invention. The solvent may be N-methylpyrrolidone (NMP) or another suitable solvent, but is not limited thereto.

The electrolyte may be a non-aqueous electrolyte or a solid electrolyte containing a dissolved lithium salt.

The non-aqueous electrolyte may include an organic solvent, which serves as a medium through which ions involved in the electrochemical reaction of the battery can move.

Examples of the organic solvent include cyclic carbonates such as ethylene carbonate, propylene carbonate, butylene carbonate, and vinylene carbonate; linear carbonates such as dimethyl carbonate, methyl ethyl carbonate, and diethyl carbonate; esters such as methyl acetate, ethyl acetate, propyl acetate, methyl propionate, ethyl propionate, and $\gamma$-butyrolactone; ethers such as 1,2-dimethoxyethane, 1,2-diethoxyethane, tetrahydrofuran, 1,2-dioxane, and 2-methyltetrahydrofuran; nitriles such as acetonitrile; and amides such as dimethylformamide.

These solvents may be used alone or in combination, and a mixed solvent of a cyclic carbonate and a linear carbonate is particularly preferred.

As the electrolyte, a gel polymer electrolyte prepared by impregnating an electrolyte solution into a polymer electrolyte such as polyethylene oxide or polyacrylonitrile, or an inorganic solid electrolyte such as LiI or $Li_3N$, may also be used.

The lithium salt is dissolved in the organic solvent and serves as a lithium ion source within the battery, enabling the fundamental operation of the lithium secondary battery and promoting lithium ion transfer between the positive and negative electrodes.

Any lithium salt conventionally used in the art and not interfering with the objectives of the present invention may be applied without limitation.

Examples of the lithium salt include one selected from the group consisting of $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiSbF_6$, $LiAlO_4$, $LiAlCl_4$, LiCl, and LiI.

Depending on the type of the lithium secondary battery, a separator may be interposed between the positive electrode and the negative electrode.

As such a separator, polyethylene, polypropylene, polyvinylidene fluoride, or a multilayer film of two or more of these materials may be used.

Examples of the multilayer separator include a polyethylene/polypropylene bilayer separator, a polyethylene/polypropylene/polyethylene trilayer separator, and a polypropylene/polyethylene/polypropylene trilayer separator; however, the present invention is not limited thereto.

The lithium secondary battery may be classified as a lithium-ion battery, a lithium-ion polymer battery, or a lithium polymer battery according to the types of separator and electrolyte used.

In addition, depending on the shape, the battery may be classified as a cylindrical, prismatic, coin-type, or pouch-type battery, and according to size, it may be categorized into bulk-type or thin-film-type batteries.

The structure and manufacturing method of the battery are not particularly limited in the present invention.

Hereinafter, preferred Examples and Comparative Examples of the present invention will be described. However, these Examples are merely illustrative embodiments of the present invention and are not intended to limit the scope of the invention.

**Examples and Comparative Examples**

Preparation of Precursor

A precursor was prepared by a conventional co-precipitation method. Specifically, $NiSO_4 \cdot 6H_2O$ was used as a nickel raw material, $CoSO_4 \cdot 7H_2O$ was used as a cobalt raw material, and $MnSO_4 \cdot H_2O$ was used as a manganese raw material. These raw materials were dissolved in distilled water to prepare an aqueous metal salt solution.

A co-precipitation reactor was prepared, and nitrogen ($N_2$) was purged into the reactor to prevent oxidation of metal ions during the co-precipitation reaction. The temperature of the reactor was maintained at 50°C.

Ammonium hydroxide ($NH_4OH$) was added as a chelating agent to the co-precipitation reactor, and sodium hydroxide (NaOH) was used for pH adjustment. The precipitate obtained through the co-precipitation process was filtered, washed with distilled water, and then dried in an oven at 100°C for 24 hours to obtain a precursor for the positive electrode active material.

Preparation of Positive Electrode Active Material

The prepared precursor was uniformly mixed with a lithium source, $LiOH \cdot H_2O$, in a stoichiometric ratio such that the molar ratio of lithium (Li) to the total metal (Me) was slightly greater than 1.

The mixture was then calcined in a box-type furnace under an oxygen flow of 25,000 mL/min at the calcination temperature and duration shown in Table 1, thereby obtaining a positive electrode active material ($LiNi_{0.9}Co_{0.03}Mn_{0.07}O_2$) having a secondary particle structure formed by aggregation of primary particles, with an average particle diameter (D50) of 12 $\mu$m, according to the Examples and Comparative Examples.

[Table 1]

|  | Calcination Temperature (°C) | Calcination Time (h) |
|---|---|---|
| Example 1 | 750 | 12 |
| Example 2 | 750 | 10 |
| Comparative Example 1 | 740 | 12 |
| Comparative Example 2 | 740 | 10 |

**Experimental Example**

**(1) Cross-Sectional Analysis of the Positive Electrode Active Material**

The positive electrode active materials prepared according to the Examples and Comparative Examples were sectioned under vacuum conditions using a focused ion beam (FIB) apparatus, and cross-sectional images of the positive electrode active materials were obtained using a scanning electron microscope (SEM).

The obtained cross-sectional images are shown in FIGS. 1 to 12 (refer to Table 2 below).

[Table 2]

|  | Drawings |
|---|---|
| Example 1 | Fig. 1 to 3 |
| Example 2 | Fig. 4 to 6 |
| Comparative Example 1 | Fig. 7 to 9 |
| Comparative Example 2 | Fig. 10 to 12 |

From the cross-sectional SEM images of the positive electrode active materials according to Examples 1 and 2 and Comparative Examples 1 and 2, regions corresponding to 1/3R, 2/3R, and 3/3R from the center of the secondary particle were defined. Using the ImageJ program, the perimeters of the primary particles observed in each region were measured, and the average perimeter and total perimeter were calculated. The results are shown in Tables 3 to 6, respectively.

As illustrated in FIGS. 1 to 3, based on the center of the secondary particle, the region within 1/3R located in the first quadrant was arbitrarily defined as region A, the region from 1/3R to 2/3R was defined as region B, and the region from 2/3R to 3/3R was defined as region C. The number of primary particles in each region was measured accordingly.

[Table 3]

| Perimeter of Primary Particles in Region A ($\mu$m) | | Perimeter of Primary Particles in Region B ($\mu$m) | | Perimeter of Primary Particles in Region C ($\mu$m) | |
|---|---|---|---|---|---|
| 1.68 | 1.58 | 2.08 | 0.87 | 4.36 | 3.75 |
| 1.29 | 2.10 | 1.61 | 2.03 | 2.96 | 2.93 |
| 1.51 | 1.26 | 1.69 | 2.62 | 0.94 | 1.83 |
| 1.25 | 1.84 | 1.81 | 2.05 | 3.55 | 2.20 |
| 0.51 | 0.44 | 2.52 | 2.71 | 0.72 | 3.19 |
| 1.66 | 2.67 | 1.89 | 4.38 | 2.79 | 1.73 |
| 1.90 | 1.45 | 2.86 | 2.18 | 3.30 | 4.34 |
| 1.43 | 2.28 | 2.42 | 2.07 | 1.77 | 1.88 |

(continued)

| Perimeter of Primary Particles in Region A (μm) | | Perimeter of Primary Particles in Region B (μm) | | Perimeter of Primary Particles in Region C (μm) | |
|---|---|---|---|---|---|
| 2.42 | 2.61 | 2.19 | 2.27 | 2.26 | 2.34 |
| 2.75 | - | 2.46 | 1.69 | 3.84 | - |
| 1.33 | - | 1.59 | 1.00 | 4.16 | - |
| 0.37 | - | 1.91 | 0.77 | 2.43 | - |
| 1.30 | - | 0.58 | 3.27 | 2.56 | - |
| 0.82 | - | 3.16 | 3.04 | 3.37 | - |
| 1.84 | - | 3.42 | 1.76 | 3.46 | - |
| 1.69 | - | 1.82 | 2.13 | 4.34 | - |
| 1.29 | - | 3.20 | 2.71 | 5.31 | - |
| 1.35 | - | 3.64 | - | 3.76 | - |
| Average Perimeter (μm): 1.58 | | Average Perimeter (μm): 2.24 | | Average Perimeter (μm): 2.96 | |
| Total Perimeter (μm): 42.60 | | Total Perimeter (μm): 78.38 | | Total Perimeter (μm): 80.05 | |
| Average Perimeter of Primary Particles in Regions A + B + C (μm): 2.26<br>Total Perimeter of Primary Particles in Regions A + B + C (μm): 201.03<br>Total Perimeter of Primary Particles Included in the Cross-Section of the Positive Electrode Active Material (μm): 804.14 | | | | | |

[Table 4]

| Perimeter of Primary Particles in Region A (μm) | Perimeter of Primary Particles in Region B (μm) | | Perimeter of Primary Particles in Region C (μm) | |
|---|---|---|---|---|
| 1.14 | 1.41 | 3.32 | 3.22 | 1.94 |
| 2.07 | 2.19 | 2.03 | 2.33 | 3.05 |
| 1.50 | 2.62 | 1.57 | 3.26 | 2.68 |
| 1.03 | 1.84 | 1.14 | 2.50 | 2.06 |
| 1.23 | 2.26 | 2.37 | 2.97 | 3.06 |
| 2.04 | 2.98 | 2.10 | 2.63 | 3.06 |
| 1.01 | 3.19 | 2.45 | 2.68 | 3.08 |
| 1.30 | 2.40 | 2.11 | 2.72 | 1.73 |
| 1.65 | 1.49 | 1.24 | 2.46 | 2.83 |
| 1.24 | 3.07 | 2.80 | 2.81 | 2.28 |
| 1.59 | 2.36 | 1.24 | 3.47 | 3.06 |
| 1.89 | 1.61 | 2.59 | 2.15 | 2.64 |
| 0.70 | 2.43 | - | 3.15 | 3.72 |
| 1.10 | 1.79 | - | 2.28 | 4.01 |
| 1.32 | 2.92 | - | 1.87 | 2.71 |
| 1.48 | 2.03 | - | 3.94 | 3.02 |
| 1.47 | 2.26 | - | 2.74 | 3.61 |
| 2.07 | 1.89 | - | 2.76 | 3.02 |
| 1.87 | 3.81 | - | 2.43 | 3.89 |
| 2.01 | 1.45 | - | 2.13 | 3.98 |

(continued)

| Perimeter of Primary Particles in Region A (μm) | Perimeter of Primary Particles in Region B (μm) | | Perimeter of Primary Particles in Region C (μm) | |
|---|---|---|---|---|
| 2.03 | 2.64 | - | 2.95 | 3.28 |
| 1.58 | 3.06 | - | 2.81 | 2.50 |
| 1.40 | 2.07 | - | 2.82 | 0.97 |
| 1.37 | 2.68 | - | 3.11 | 1.49 |
| - | 2.48 | - | 2.88 | - |
| Average Perimeter (μm): 1.50 | Average Perimeter (μm): 2.27 | | Average Perimeter (μm): 2.80 | |
| Total Perimeter (μm): 36.12 | Total Perimeter (μm): 83.90 | | Total Perimeter (μm): 136.74 | |
| Average Perimeter of Primary Particles in Regions A + B + C (μm): 2.33<br>Total Perimeter of Primary Particles in Regions A + B + C (μm): 256.76<br>Total Perimeter of Primary Particles Included in the Cross-Section of the Positive Electrode Active Material (μm): 1,027.02 | | | | |

[Table 5]

| Perimeter of Primary Particles in Region A (μm) | Perimeter of Primary Particles in Region B (μm) | | | Perimeter of Primary Particles in Region C (μm) | | |
|---|---|---|---|---|---|---|
| 0.93 | 1.83 | 0.95 | 1.41 | 1.57 | 1.27 | 1.55 |
| 1.11 | 1.32 | 1.15 | 2.30 | 1.35 | 2.29 | 3.32 |
| 1.39 | 1.62 | 1.55 | 0.90 | 2.40 | 1.99 | 2.47 |
| 1.45 | 1.34 | 2.01 | 2.26 | 1.46 | 2.17 | 2.47 |
| 1.48 | 1.12 | 2.12 | 1.39 | 2.21 | 3.21 | 2.56 |
| 1.91 | 1.14 | 1.86 | 1.88 | 2.02 | 2.10 | 1.74 |
| 1.40 | 1.33 | 1.00 | 1.88 | 1.57 | 2.43 | 1.72 |
| 1.39 | 1.62 | 1.67 | 1.65 | 2.01 | 2.31 | 2.40 |
| 1.57 | 1.70 | 2.09 | 1.30 | 1.60 | 1.52 | 1.53 |
| 1.81 | 1.74 | 1.80 | 2.35 | 1.55 | 2.09 | 2.51 |
| 1.60 | 1.09 | 1.20 | 2.29 | 1.30 | 2.05 | 1.53 |
| 2.06 | 1.63 | 1.31 | 1.78 | 2.11 | 2.01 | 1.24 |
| 0.99 | 1.49 | 1.46 | 1.40 | 1.79 | 2.20 | 1.62 |
| 1.85 | 1.15 | 1.19 | - | 2.44 | 1.36 | 1.57 |
| 1.49 | 1.29 | 2.31 | - | 1.91 | 2.65 | 1.82 |
| 0.94 | 1.81 | 1.94 | - | 1.28 | 1.59 | 1.25 |
| 1.46 | 1.08 | 1.87 | - | 2.04 | 1.20 | 1.26 |
| 1.57 | 1.13 | 1.49 | - | 1.57 | 1.62 | 1.23 |
| 1.33 | 1.55 | 1.15 | - | 1.93 | 2.15 | 1.66 |
| - | 2.15 | 1.55 | - | 2.18 | 1.29 | 2.48 |
| - | 1.16 | 2.95 | - | 1.69 | 1.91 | 1.81 |
| - | 1.22 | 0.89 | - | 1.65 | 3.91 | 1.91 |
| - | 1.66 | 1.77 | - | 2.67 | 2.31 | 1.71 |
| - | 1.61 | 1.37 | - | 1.61 | 3.00 | 2.17 |
| - | 1.65 | 0.91 | - | 1.37 | 1.70 | - |

(continued)

| Perimeter of Primary Particles in Region A (μm) | Perimeter of Primary Particles in Region B (μm) | Perimeter of Primary Particles in Region C (μm) |
|---|---|---|
| Average Perimeter (μm): 1.46 | Average Perimeter (μm): 1.57 | Average Perimeter (μm): 1.93 |
| Total Perimeter (μm): 27.73 | Total Perimeter (μm): 98.77 | Total Perimeter (μm): 143.10 |
| Average Perimeter of Primary Particles in Regions A + B + C (μm): 1.73<br>Total Perimeter of Primary Particles in Regions A + B + C (μm): 269.60<br>Total Perimeter of Primary Particles Included in the Cross-Section of the Positive Electrode Active Material (μm): 1,078.40 | | |

[Table 6]

| Perimeter of Primary Particles in Region A (μm) | Perimeter of Primary Particles in Region B (μm) | | Perimeter of Primary Particles in Region C (μm) | | |
|---|---|---|---|---|---|
| 2.05 | 2.13 | 2.10 | 1.84 | 1.21 | 1.11 |
| 2.12 | 1.58 | 1.67 | 1.30 | 3.54 | 1.93 |
| 1.31 | 1.22 | 2.22 | 1.75 | 1.35 | 2.49 |
| 1.14 | 1.62 | 1.80 | 2.12 | 1.52 | 1.49 |
| 1.64 | 1.41 | 2.36 | 1.04 | 1.43 | 1.82 |
| 1.86 | 1.38 | 1.61 | 0.67 | 0.94 | 2.74 |
| 0.92 | 1.42 | 0.81 | 1.47 | 1.29 | 2.85 |
| 1.10 | 1.53 | 2.62 | 1.44 | 1.24 | 2.57 |
| 0.65 | 1.24 | 1.44 | 1.23 | 1.71 | 1.45 |
| 2.09 | 0.76 | 3.04 | 0.90 | 1.91 | 1.27 |
| 0.91 | 2.11 | 2.01 | 0.74 | 1.58 | 1.92 |
| 1.66 | 2.06 | 1.83 | 1.81 | 1.63 | 1.61 |
| 2.61 | 1.18 | 1.22 | 1.72 | 1.89 | 1.98 |
| 1.12 | 1.46 | 1.24 | 1.89 | 0.84 | 1.78 |
| 0.92 | 0.92 | 1.87 | 1.73 | 1.47 | 3.41 |
| 1.25 | 1.00 | 1.65 | 1.76 | 2.16 | 1.83 |
| 1.59 | 0.75 | 2.05 | 1.85 | 1.73 | 0.64 |
| 1.37 | 0.96 | 1.92 | 1.95 | 1.93 | 2.12 |
| 0.88 | 1.15 | 2.02 | 1.78 | 2.22 | 1.08 |
| - | 1.26 | 3.81 | 2.36 | 2.57 | 1.58 |
| - | 1.33 | 2.86 | 1.38 | 2.59 | 1.87 |
| - | 2.05 | 1.43 | 1.12 | 1.49 | 1.85 |
| - | 3.00 | 1.03 | 1.17 | 1.55 | 1.18 |
| - | 0.93 | 1.98 | 0.90 | 2.32 | 1.40 |
| - | 1.92 | 1.65 | 1.53 | 2.44 | 1.60 |
| - | 1.76 | 1.04 | 1.65 | 1.17 | 1.60 |
| - | 1.48 | 1.36 | 1.94 | 3.31 | 2.78 |
| - | 2.38 | 1.77 | 2.87 | 1.35 | 2.36 |
| - | - | - | 0.93 | 1.51 | 2.15 |
| - | - | - | 1.17 | 1.05 | 2.35 |

(continued)

| Perimeter of Primary Particles in Region A (μm) | Perimeter of Primary Particles in Region B (μm) | | Perimeter of Primary Particles in Region C (μm) |
|---|---|---|---|
| Average Perimeter (μm): 1.43 | Average Perimeter (μm): 1.69 | | Average Perimeter (μm): 1.73 |
| Total Perimeter (μm): 27.19 | Total Perimeter (μm): 94.40 | Total Perimeter (μm): 155.68 | |
| Average Perimeter of Primary Particles in Regions A + B + C (μm): 1.68 Total Perimeter of Primary Particles in Regions A + B + C (μm): 277.27 Total Perimeter of Primary Particles Included in the Cross-Section of the Positive Electrode Active Material (μm): 1,198.08 | | | |

In addition, the calculated values related to Formula 1 are shown in Table 7 below.

[Table 7]

| | a | b | c | BET ($m^2/g$) | Discharge Capacity (mAh/g) at 0.1/0.1C, 3-4.3 V | High-Temperature Cycle Life (%) at 0.5/1C @ 45°C, same operating voltage |
|---|---|---|---|---|---|---|
| Example 1 | 1.42 | 1.32 | 1.88 | 0.55 | 220.3 | 93.1 |
| Example 2 | 1.51 | 1.23 | 1.85 | 0.71 | 220.9 | 93.0 |
| Comparative example 1 | 1.07 | 1.23 | 1.32 | 0.79 | 219.3 | 92.2 |
| Comparative example 2 | 1.18 | 1.03 | 1.21 | 0.95 | 218.6 | 92.8 |
| **a:** Value obtained by dividing the average perimeter of Region B by the average perimeter of Region A **b:** Value obtained by dividing the average perimeter of Region C by the average perimeter of Region B **c:** Value obtained by dividing the average perimeter of Region C by the average perimeter of Region A | | | | | | |

## (2) Measurement of BET Specific Surface Area

Four grams of the positive electrode active material precursor prepared according to the Examples and Comparative Examples were vacuum-dried at 300°C. The specific surface area of the precursor was then measured by adsorbing and desorbing nitrogen gas on the surface of the material and determining the adsorption amount at each partial pressure. The results are shown in Table 7 above.

## (3) Evaluation of Discharge Capacity and High-Temperature Cycle Life

For physical property and electrochemical evaluations of the positive electrode active material according to the Examples, coin-type half-cells were fabricated as follows.

Specifically, the positive electrode active material, a polyvinylidene fluoride (PVDF) binder (product name: KF9700), and a carbon black conductive material were mixed at a weight ratio of 96.5:1.5:2. The resulting mixture was added to an N-methyl-2-pyrrolidone (NMP) solvent to prepare a positive electrode slurry having a solid content of approximately 60 wt%.

The slurry was coated onto an aluminum foil current collector (Al foil, thickness: 20 μm) using a doctor blade, dried, and then roll-pressed to fabricate a positive electrode. The loading level of the positive electrode was approximately 16 mg/cm$^2$, and the rolling density was about 3.5 g/cm$^3$.

A 2032 coin-type half-cell was fabricated in a conventional manner using the above positive electrode, a lithium metal negative electrode (thickness: 200 μm, Welcos), an electrolyte, and a polyethylene separator. The electrolyte was a mixed solution prepared by dissolving 1 M LiPF$_6$ and 2% vinylene carbonate (VC) in a mixed solvent of ethylene carbonate (EC), dimethyl carbonate (DMC), and diethyl carbonate (DEC) at a volume ratio of EC:DMC:DEC = 1:2:1.

For the fabricated coin-type half-cell, formation cycling was first carried out by charging and discharging once at a current density of 0.1C within a voltage range of 3.0-4.3 V. Subsequently, charging and discharging were performed again at 0.1C under the same voltage range to evaluate the discharge capacity. The results are shown in Table 7 above.

Additionally, to evaluate high-temperature cycle life, the coin-type half-cell was operated at 45°C under a voltage range of 3.0-4.3 V, and 50 charge/discharge cycles were performed at 0.5C charge and 1C discharge (based on a nominal capacity of 200 mAh/g). The capacity retention ratio after the 50th cycle relative to the first cycle was measured, and the results are also shown in Table 7.

Referring to Tables 1 through 7, it can be confirmed that the positive electrode active material according to the Examples exhibits a smaller specific surface area, and that a lithium secondary battery using the same demonstrates excellent high-temperature cycle life characteristics.

The present invention is not limited to the foregoing Examples but may be implemented in various other forms. It will be understood by those skilled in the art that the present invention may be practiced in other specific forms without departing from the spirit or essential characteristics thereof. Therefore, the embodiments described above are to be understood as illustrative and not restrictive in all respects.

**Claims**

1. A positive electrode active material in a form of a secondary particle comprising a plurality of primary particles, wherein the positive electrode active material satisfies the following Formula 1:

    (Average perimeter of the primary particles present in a region of 2/3 to 3/3R from the center of the secondary particle) $\geq 1.5 \times$ (Average perimeter of the primary particles present in a region of 1/3R from the center of the secondary particle),                    [Formula 1]

    wherein R is a distance from the center of the secondary particle to the surface of the secondary particle.

2. The positive electrode active material of claim 1, wherein the positive electrode active material satisfies the following Formula 2:

    (Average perimeter of the primary particles present in a region of 2/3 to 3/3R from the center of the secondary particle) $\geq 1.7 \times$ (Average perimeter of the primary particles present in a region of 1/3R from the center of the secondary particle).                    [Formula 2]

3. The positive electrode active material of claim 2, wherein the positive electrode active material satisfies the following Formula 3:

    $3.0 \times$ (Average perimeter of the primary particles present in a region of 1/3R from the center of the secondary particle) $\geq$ (Average perimeter of the primary particles present in a region of 2/3 to 3/3R from the center of the secondary particle) $\geq 1.8 \times$ (Average perimeter of the primary particles present in a region of 1/3R from the center of the secondary particle).                    [Formula 3]

4. The positive electrode active material of claim 1, wherein the positive electrode active material satisfies the following Formula 4:

    (Average perimeter of the primary particles present in a region of 1/3 to 2/3R from the center of the secondary particle) $\geq 1.1 \times$ (Average perimeter of the primary particles present in a region of 1/3R from the center of the secondary particle).                    [Formula 4]

5. The positive electrode active material of claim 4, wherein the positive electrode active material satisfies the following Formula 5:

    $2.0 \times$ (Average perimeter of the primary particles present in a region of 1/3R from the center of the secondary particle) $\geq$ (Average perimeter of the primary particles present in a region of 1/3 to 2/3R from the center of the secondary particle) $\geq 1.2 \times$ (Average perimeter of the primary particles present in a region of 1/3R from the center of the secondary particle).                    [Formula 5]

6. The positive electrode active material of claim 1, wherein the positive electrode active material satisfies the following Formula 6:

(Average perimeter of the primary particles present in a region of 2/3 to 3/3R from the center of the secondary particle) $\geq 1.1 \times$ (Average perimeter of the primary particles present in a region of 1/3 to 2/3R from the center of the secondary particle).  [Formula 6]

7. The positive electrode active material of claim 6, wherein the positive electrode active material satisfies the following Formula 7:

$2.0 \times$ (Average perimeter of the primary particles present in a region of 1/3 to 2/3R from the center of the secondary particle) $\geq$ (Average perimeter of the primary particles present in a region of 2/3 to 3/3R from the center of the secondary particle) $\geq 1.2 \times$ (Average perimeter of the primary particles present in a region of 1/3 to 2/3R from the center of the secondary particle).  [Formula 7]

8. The positive electrode active material of claim 1, wherein the average perimeter of the primary particles present in a region of 2/3 to 3/3R from the center of the secondary particle is 3.2 $\mu$m or less.

9. The positive electrode active material of claim 1, wherein the average perimeter of the primary particles present in a region of 1/3 to 2/3R from the center of the secondary particle is 2.5 $\mu$m or less.

10. The positive electrode active material of claim 1, wherein the average perimeter of the primary particles present in a region of 1/3R from the center of the secondary particle is 1.8 $\mu$m or less.

11. The positive electrode active material of claim 1, wherein the secondary particle has an average particle diameter (D50) of 20 $\mu$m or less.

12. The positive electrode active material of claim 1, which is represented by the following Chemical Formula 1:

[Chemical Formula 1]  $Li_aNi_xCo_yMn_zM_{1k}O_2$

wherein, in Chemical Formula 1, $0.9 \leq a \leq 1.1$, $0.3 \leq x \leq 1.0$, $0 \leq y \leq 0.4$, $0 \leq z \leq 0.4$, $0 \leq k \leq 0.04$, and $x + y + z + k = 1$, and $M_1$ is one or more elements selected from the group consisting of Al, Zr, Nb, Mo, W, Ti, Ce, Mg, B, P, V, and Sr.

13. A lithium secondary battery comprising: the positive electrode active material according to any one of claims 1 to 12; a negative electrode; and a non-aqueous electrolyte.

【Fig. 1】

【Fig. 2】

【Fig. 3】

【Fig. 4】

【Fig. 5】

【Fig. 6】

EP 4 723 228 A1

【Fig. 7】

21

【Fig. 8】

【Fig. 9】

【Fig. 10】

【Fig. 11】

【Fig. 12】

## INTERNATIONAL SEARCH REPORT

| International application No. |
|---|
| **PCT/KR2024/007025** |

| A. | CLASSIFICATION OF SUBJECT MATTER |
|---|---|

**H01M 4/525**(2010.01)i; **H01M 4/505**(2010.01)i; **H01M 10/052**(2010.01)i; **H01M 4/131**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/525(2010.01); H01M 10/052(2010.01); H01M 10/0525(2010.01); H01M 4/04(2006.01); H01M 4/485(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질 (cathode active materials), 1차 입자 (primary particle), 2차 입자 (secondary particle), 평균 둘레 (average-circumference)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111370679 A (NINGDE CONTEMPORARY AMPEREX TECHNOLOGY CO., LTD.) 03 July 2020 (2020-07-03)<br>See abstract; paragraphs [0034], [0043], [0044] and [0106]-[0120]; and claim 1. | 1-13 |
| A | KR 10-2392379 B1 (SAMSUNG SDI CO., LTD.) 29 April 2022 (2022-04-29)<br>See abstract; and claims 1 and 3-20. | 1-13 |
| A | KR 10-2357941 B1 (SAMSUNG SDI CO., LTD.) 03 February 2022 (2022-02-03)<br>See abstract; and claims 1 and 4-11. | 1-13 |
| A | KR 10-2004-0106207 A (HITACHI, LTD. et al.) 17 December 2004 (2004-12-17)<br>See abstract; and claims 1-10. | 1-13 |
| A | KR 10-2022-0156506 A (ECOPRO BM CO., LTD.) 25 November 2022 (2022-11-25)<br>See abstract; and claims 1-17. | 1-13 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 September 2024** | **11 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 723 228 A1

| Patent document cited in search report | | | Publication date (day/month/year) | Patent family member(s) | | | Publication date (day/month/year) |
|---|---|---|---|---|---|---|---|
| CN | 111370679 | A | 03 July 2020 | WO | 2020-135512 | A1 | 02 July 2020 |
| KR | 10-2392379 | B1 | 29 April 2022 | CN | 113871609 | A | 31 December 2021 |
| | | | | EP | 3932872 | A2 | 05 January 2022 |
| | | | | EP | 3932872 | A3 | 26 January 2022 |
| | | | | JP | 2022-013822 | A | 18 January 2022 |
| | | | | JP | 2023-104990 | A | 28 July 2023 |
| | | | | KR | 10-2022-0001953 | A | 29 April 2022 |
| | | | | KR | 10-2022-0002173 | A | 06 January 2022 |
| | | | | KR | 10-2436422 | B1 | 25 August 2022 |
| | | | | US | 2021-0408528 | A1 | 30 December 2021 |
| KR | 10-2357941 | B1 | 03 February 2022 | CN | 111656586 | A | 11 September 2020 |
| | | | | CN | 111656586 | B | 03 November 2023 |
| | | | | EP | 3748743 | A1 | 09 December 2020 |
| | | | | KR | 10-2019-0092281 | A | 07 August 2019 |
| | | | | US | 2020-0343552 | A1 | 29 October 2020 |
| | | | | WO | 2019-147002 | A1 | 01 August 2019 |
| KR | 10-2004-0106207 | A | 17 December 2004 | CN | 100477372 | C | 08 April 2009 |
| | | | | CN | 100530778 | C | 19 August 2009 |
| | | | | CN | 100565984 | C | 02 December 2009 |
| | | | | CN | 101009369 | A | 01 August 2007 |
| | | | | CN | 101009369 | B | 08 December 2010 |
| | | | | CN | 101009390 | A | 01 August 2007 |
| | | | | CN | 101114708 | A | 30 January 2008 |
| | | | | CN | 1282265 | C | 25 October 2006 |
| | | | | CN | 1574429 | A | 02 February 2005 |
| | | | | CN | 1841818 | A | 04 October 2006 |
| | | | | EP | 1487038 | A2 | 15 December 2004 |
| | | | | EP | 1487038 | A3 | 17 February 2010 |
| | | | | EP | 1487038 | B1 | 12 June 2013 |
| | | | | EP | 2237347 | A2 | 06 October 2010 |
| | | | | EP | 2237347 | A3 | 02 March 2011 |
| | | | | EP | 2237347 | B1 | 20 November 2013 |
| | | | | JP | 2005-005105 | A | 06 January 2005 |
| | | | | JP | 4740409 | B2 | 03 August 2011 |
| | | | | KR | 10-1116764 | B1 | 13 March 2012 |
| | | | | KR | 10-1129333 | B1 | 26 March 2012 |
| | | | | KR | 10-2011-0122809 | A | 11 November 2011 |
| | | | | TW | 200428693 | A | 16 December 2004 |
| | | | | TW | 287889 | A | 01 October 2007 |
| | | | | TW | I287889 | B | 01 October 2007 |
| | | | | US | 2004-0253516 | A1 | 16 December 2004 |
| | | | | US | 2007-0212602 | A1 | 13 September 2007 |
| | | | | US | 2007-0259266 | A1 | 08 November 2007 |
| | | | | US | 2011-0127463 | A1 | 02 June 2011 |
| | | | | US | 7604898 | B2 | 20 October 2009 |
| | | | | US | 7910246 | B2 | 22 March 2011 |
| | | | | US | 8097363 | B2 | 17 January 2012 |
| KR | 10-2022-0156506 | A | 25 November 2022 | CN | 112885991 | A | 01 June 2021 |
| | | | | CN | 112886001 | A | 01 June 2021 |
| | | | | EP | 3828138 | A1 | 02 June 2021 |

Form PCT/ISA/210 (patent family annex) (July 2022)

# EP 4 723 228 A1

| INTERNATIONAL SEARCH REPORT<br>Information on patent family members | | International application No.<br>**PCT/KR2024/007025** | |
|---|---|---|---|

| Patent document<br>cited in search report | Publication date<br>(day/month/year) | Patent family member(s) | Publication date<br>(day/month/year) |
|---|---|---|---|
| | | EP 3828139 A1 | 02 June 2021 |
| | | JP 2021-084856 A | 03 June 2021 |
| | | JP 2021-086830 A | 03 June 2021 |
| | | JP 2022-122997 A | 23 August 2022 |
| | | JP 2022-141690 A | 29 September 2022 |
| | | JP 7089002 B2 | 21 June 2022 |
| | | JP 7100102 B2 | 12 July 2022 |
| | | JP 7482945 B2 | 14 May 2024 |
| | | JP 7523490 B2 | 26 July 2024 |
| | | KR 10-2021-0067838 A | 08 June 2021 |
| | | KR 10-2021-0067842 A | 08 June 2021 |
| | | KR 10-2022-0116105 A | 22 August 2022 |
| | | KR 10-2023-0033698 A | 08 March 2023 |
| | | KR 10-2023-0107157 A | 14 July 2023 |
| | | KR 10-2023-0160218 A | 23 November 2023 |
| | | KR 10-2024-0036535 A | 20 March 2024 |
| | | KR 10-2430966 B1 | 11 August 2022 |
| | | KR 10-2468595 B1 | 18 November 2022 |
| | | KR 10-2550729 B1 | 03 July 2023 |
| | | KR 10-2559194 B1 | 25 July 2023 |
| | | KR 10-2602651 B1 | 16 November 2023 |
| | | KR 10-2646131 B1 | 11 March 2024 |
| | | US 11588154 B2 | 21 February 2023 |
| | | US 11631849 B2 | 18 April 2023 |
| | | US 11837725 B2 | 05 December 2023 |
| | | US 2021-0167380 A1 | 03 June 2021 |
| | | US 2021-0167381 A1 | 03 June 2021 |
| | | US 2023-0163297 A1 | 25 May 2023 |
| | | US 2024-0038988 A1 | 01 February 2024 |
| | | US 2024-0186502 A1 | 06 June 2024 |

Form PCT/ISA/210 (patent family annex) (July 2022)